# EUROPÄISCHE PATENTSCHRIFT

(11) **EP 1 784 874 B1**
(45) Veröffentlichungstag und Bekanntmachung des Hinweises auf die Patenterteilung: **19.03.2008**
(21) Anmeldenummer: 05753954.6
(22) Anmeldetag: 23.06.2005
(51) Int. Cl.: H01L 41/04, F02D 41/20

(54) **ANSTEUERSCHALTUNG FÜR EIN STELLGLIED**
CONTROL CIRCUIT FOR AN ACTUATOR
CIRCUIT DE COMMANDE POUR ACTIONNEUR

(30) Priorität: 04.08.2004 DE 102004037720
(43) Veröffentlichungstag der Anmeldung: 16.05.2007
(73) Patentinhaber: ROBERT BOSCH GMBH, 70442 Stuttgart (DE)
(72) Erfinder: REINEKE, Joerg, 71254 Ditzingen (DE); WIEDERGUT, Armin, A-9710 Feistritz (AT); SCHWEIGER, Karl, A-2540 Bad Voslau (AT); FARKAS, Karl, A-2332 Hennersdorf (AT); SCHMIDT, Karl-Heinz, A-7400 Oberwart (AT)
(86) Internationale Anmeldenummer: PCT/EP2005/052927
(87) Internationale Veröffentlichungsnummer: WO 2006/015904

(56) Entgegenhaltungen:
- EP-A- 0 611 880
- EP-A- 1 014 413
- DE-A1- 4 011 782

## Beschreibung

### Stand der Technik

Die vorliegende Erfindung betrifft eine Ansteuerschaltung für mindestens ein Stellglied, insbesondere für ein kapazitives Stellglied eines Einspritzsystems einer Brennkraftmaschine, bei der das Stellglied mit einem Steuerstrom beaufschlagbar ist.

Die vorliegende Erfindung betrifft ferner ein Einspritzsystem für eine Brennkraftmaschine und eine Brennkraftmaschine.

Herkömmliche Ansteuerschaltungen des vorstehend genannten Typs werden beispielsweise zur Ansteuerung von piezoelektrischen Elementen verwendet, welche beispielsweise auf eine Ventilnadel eines Einspritzventils wirken, um eine Kraftstoffeinspritzung in einen Brennraum der Brennkraftmaschine zu bewirken.

Um einen für die Ansteuerung der Ventilnadel ausreichenden Hub des piezoelektrischen Elements zu erreichen, muss bei bekannten Systemen eine Ansteuerspannung von 160 V und mehr angelegt werden, die üblicherweise getaktet wird, um ein kontrolliertes Öffnen des Einspritzventils zu erzielen und eine Beschädigung der Keramik des piezoelektrischen Elements zu vermeiden. Darüber hinaus ist bei derartigen Ansteuerschaltungen häufig eine Induktivität vorgesehen, welche den Strom in das piezoelektrische Element begrenzt.

Aufgrund der Taktung der Ansteuerspannung bildet sich ein dreieckförmiger Stromverlauf aus, und bei den zeitlichen Änderungen des Ansteuerstroms treten Spannungssprünge beispielsweise auch an Zuleitungsinduktivitäten der piezoelektrischen Elemente auf. Die mit den Spannungssprüngen einhergehenden hochfrequenten Spannungsanteile bewirken insbesondere kapazitive Störströme, die beispielsweise über ein Gehäuse des Einspritzventils in den Motorblock und von dort über eine Karosserieverbindung wiederum in das Steuergerät fließen.

Besonders nachteilig ist hierbei die sehr niederohmige Verbindung zwischen dem Motorblock, der Karosserie und dem Steuergerät, wodurch zusammen mit den die Störströme ermöglichenden parasitären Kapazitäten sowie ggf. parasitären Induktivitäten ein Resonanzkreis hoher Güte gebildet wird. Die Resonanzfrequenz des Resonanzkreises wird durch die Größe der parasitären Kapazitäten und der Induktivität der Rückleitung über den Motorblock und die Karosserieverbindung bestimmt. Typische Kapazitätswerte für die parasitären Kapazitäten betragen zwischen den Anschlussleitungen der piezoelektrischen Elemente und einem Gehäuse des Einspritzventils beispielsweise etwa 500 pF bis 1 nF, wobei diese Werte je nach Ausführung der piezoelektrischen Elemente bzw. der Einspritzventile schwanken können.

Die in dem Resonanzkreis entstehenden elektromagnetischen Schwingungen führen zu erheblichen Störungen z. B. bei Radioempfangssystemen eines die Ansteuerschaltung enthaltenden Kraftfahrzeugs oder auch bei weiteren elektronischen Systemen. Oftmals werden zulässige Grenzwerte für derartige elektromagnetische Emissionen im Motorraum überschritten.

Demgemäß ist es Aufgabe der vorliegenden Erfindung, eine Ansteuerschaltung der eingangs genannten Art sowie ein Einspritzsystem für eine Brennkraftmaschine und eine Brennkraftmaschine derart weiterzubilden, dass insbesondere die beschriebenen Störströme vermieden werden.

Bei der Ansteuerschaltung wird diese Aufgabe erfindungsgemäß dadurch gelöst, dass eine Drossel, vorzugsweise mit einem Kern, und mit mehreren Wicklungen vorgesehen ist, wobei die Wicklungen so ausgebildet und derart mit der Ansteuerschaltung verbunden sind, dass ein in das Stellglied fließender Steuerstrom und ein aus dem Stellglied fließender Steuerstrom jeweils durch verschiedene Wicklungen der Drossel fließt, und dass ein von dem in das Stellglied fließenden Steuerstrom in der Drossel bzw. deren Kern hervorgerufener magnetischer Fluss und ein von dem aus dem Stellglied fließenden Strom in der Drossel bzw. deren Kern hervorgerufener magnetischer Fluss sich gegenseitig kompensieren.

Durch die gegenseitige Kompensation der magnetischen Flüsse, welche durch den jeweiligen Steuerstrom in der Drossel bzw. deren Kern bewirkt werden, ergibt sich eine Dämpfung des Steuerstroms in der Drossel lediglich durch einen Ohmwiderstand der Wicklungen sowie eine üblicherweise vernachlässigbar kleine Streuinduktivität der Wicklungen.

Beim Auftreten asymmetrischer Störungen, wie z. B. bei einem Störstrom, der aufgrund parasitärer Kapazitäten beispielsweise von dem Stellglied zur Karosserie abfließt, kann die vorstehend genannte Kompensation nicht erfolgen, da sich der in das Stellglied fließende Steuerstrom und der aus dem Stellglied fließende Steuerstrom betragsmäßig unterscheiden.

Für diesen Differenzstrom zwischen den sich normalerweise kompensierenden Steuerströmen wirkt die Drossel mit ihrer Nenninduktivität und der daraus resultierenden hohen Impedanz für Wechselströme stark dämpfend, weil für den Störstrom keine Kompensation wie bei dem Steuerstrom möglich ist.

Bei einer sehr vorteilhaften Ausführungsform der vorliegenden Erfindung ist die Wicklung direkt mit einer Anschlussleitung des Stellglieds verbunden. Dadurch werden Störströme von der Drossel gedämpft, welche von dem Stellglied beispielsweise in die Karosserie abfließen. Besonders vorteilhaft ist bei dieser Ausführungsform der Erfindung darüber hinaus die Tatsache, dass beispielsweise kapazitive Kopplungen gegen eine Fahrzeugmasse, die innerhalb der Ansteuerschaltung, jedoch nicht zwischen der Wicklung der Drossel und dem Stellglied auftreten, nicht zu den Störströmen entsprechenden Ausgleichsströmen über das Stellglied führen.

Bei einer weiteren sehr vorteilhaften Ausführungsform der vorliegenden Erfindung sind die Wicklungen direkt mit Anschlussleitungen einer zur Ansteuerung des Stellglieds vorgesehenen Endstufe verbunden. In dieser Konfiguration fließt durch die jeweilige Wicklung der Drossel ein gesamter von der Endstufe aufgenommener Steuerstrom, der sich beispielsweise auf mehrere Stellglieder verteilen kann, je nach Ausbildung der Endstufe und der Ansteuerung der Stellglieder durch die Endstufe. Hieraus ergibt sich der Vorteil, dass insbesondere auch bei einer Ansteuerung mehrerer Stellglieder durch die Endstufe nur zwei Wicklungen bei der Drossel erforderlich sind.

Eine andere sehr vorteilhafte Ausführungsform der vorliegenden Erfindung ist dadurch gekennzeichnet, dass mindestens eine Wicklung direkt mit einer Anschlussleitung des Stellglieds verbunden ist, und dass mindestens eine Wicklung direkt mit einer Anschlussleitung einer zur Ansteuerung des Stellglieds vorgesehenen Endstufe verbunden ist.

Bei dieser Variante der Erfindung ist besonders vorteilhaft, dass beispielsweise kapazitive Kopplungen innerhalb eines Großteils der Endstufe sich nicht in Form von Ausgleichsströmen über die Stellglieder in der bereits oben beschriebenen Art auswirken. Lediglich diejenigen Teile der Endstufe, welche zwischen derjenigen Wicklung angeordnet sind, die direkt mit einer Anschlussleitung der Endstufe verbunden ist und zwischen den Stellgliedern, können bei z. B. kapazitiver Auskopplung eines Störstroms auch zu entsprechenden Ausgleichsströmen über die Stellglieder führen.

Bei einer weiteren sehr vorteilhaften Ausführungsform der vorliegenden Erfindung ist der Kern der Drossel als Ferrit-Kern ausgebildet.

Als eine weitere Lösung der Aufgabe der vorliegenden Erfindung ist ein Einspritzsystem gemäß Anspruch 6 angegeben.

Als noch eine weitere Lösung der Aufgabe der vorliegenden Erfindung ist eine Brennkraftmaschine gemäß Anspruch 7 angegeben.

Weitere Merkmale, Vorteile und Ausführungsbeispiele der vorliegenden Erfindung sind in der nachfolgenden Figurenbeschreibung unter Bezugnahme auf die Figuren der Zeichnung erläutert, wobei
- Figur 1a: ein erstes Ausführungsbeispiel der vorliegenden Erfindung zeigt,
- Figur 1b: ein zweites Ausführungsbeispiel der vorliegenden Erfindung zeigt,
- Figur 1c: ein drittes Ausführungsbeispiel der vorliegenden Erfindung zeigt,
- Figur 1d: eine Detaildarstellung der erfindungsgemäßen Drossel zeigt,
- Figur 2: eine weitere Ausführungsform der erfindungsgemäßen Ansteuerschaltung zeigt,
- Figur 3a bis 3d: Messergebnisse von Messungen im Zeitbereich zur Veranschaulichung einer Wirkungsweise der erfindungsgemäßen Ansteuerschaltung zeigen,
- Figur 4a bis 4c: Messergebnisse von Messungen im Frequenzbereich zur Veranschaulichung der Wirkungsweise der erfindungsgemäßen Ansteuerschaltung zeigen, und
- Figur 5: ein Blockschaltbild einer erfindungsgemäßen Brennkraftmaschine zeigt.

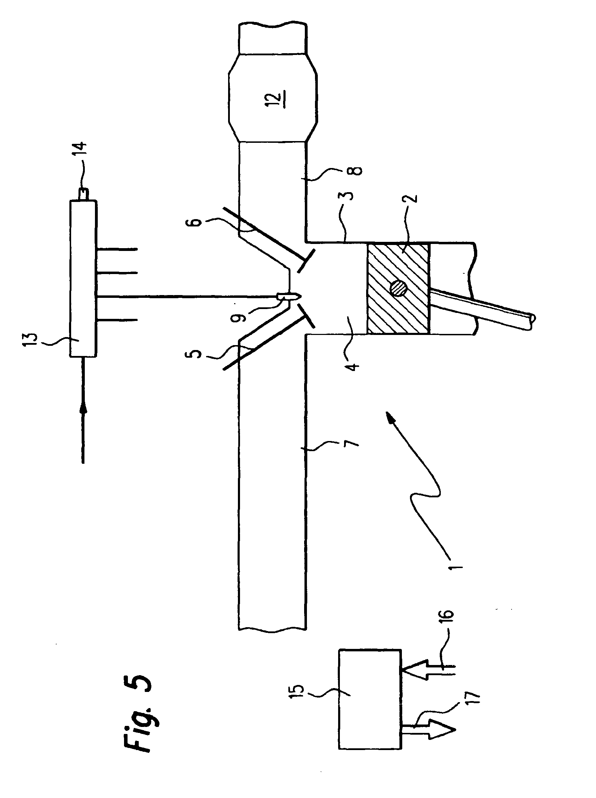

In der Figur 5 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragt ein Einspritzventil 9 in den Brennraum 4, über das Kraftstoff in den Brennraum 4 eingespritzt werden kann. In dem Abgasrohr 8 ist ein Katalysator 12 untergebracht, der der Reinigung der durch die Verbrennung des Kraftstoffs entstehenden Abgase dient.

Das Einspritzventil 9 ist über eine Druckleitung mit einem Kraftstoffspeicher 13 verbunden. In entsprechender Weise sind auch die Einspritzventile der anderen Zylinder der Brennkraftmaschine 1 mit dem Kraftstoffspeicher 13 verbunden. Der Kraftstoffspeicher 13 wird über eine Zuführleitung mit Kraftstoff versorgt. Hierzu ist eine vorzugsweise mechanische Kraftstoffpumpe vorgesehen, die dazu geeignet ist, den erwünschten Druck in dem Kraftstoffspeicher 13 aufzubauen.

Weiterhin ist an dem Kraftstoffspeicher 13 ein Drucksensor 14 angeordnet, mit dem der Druck in dem Kraftstoffspeicher 13 messbar ist. Bei diesem Druck handelt es sich um denjenigen Druck, der auf den Kraftstoff ausgeübt wird, und mit dem deshalb der Kraftstoff über das Einspritzventil 9 in den Brennraum 3 der Brennkraftmaschine 1 eingespritzt wird.

Im Betrieb der Brennkraftmaschine 1 wird Kraftstoff in den Kraftstoffspeicher 13 gefördert. Dieser Kraftstoff wird über die Einspritzventile 9 der einzelnen Zylinder 3 in die zugehörigen Brennräume 4 eingespritzt. Durch Verbrennung des in den Brennräumen 3 vorherrschenden Luft/Kraftstoffgemischs werden die Kolben 2 in eine Hin- und Herbewegung versetzt. Diese Bewegungen werden auf eine nicht dargestellte Kurbelwelle übertragen und üben auf diese ein Drehmoment aus.

Ein Steuergerät 15 ist von Eingangssignalen 16 beaufschlagt, die mittels Sensoren gemessene Betriebsgrößen der Brennkraftmaschine 1 darstellen. Beispielsweise ist das Steuergerät 15 mit dem Drucksensor 14, einem Luftmassensensor, einem Drehzahlsensor und dergleichen verbunden. Des Weiteren ist das Steuergerät 15 mit einem Fahrpedalsensor verbunden, der ein Signal erzeugt, das die Stellung eines von einem Fahrer betätigbaren Fahrpedals und damit das angeforderte Drehmoment angibt. Das Steuergerät 15 erzeugt Ausgangssignale 17, mit denen über Aktoren bzw. Steller das Verhalten der Brennkraftmaschine 1 beeinflusst werden kann. Beispielsweise ist das Steuergerät 15 mit dem Einspritzventil.9 und dergleichen verbunden und erzeugt die zu deren Ansteuerung erforderlichen Signale.

Unter anderem ist das Steuergerät 15 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 15 insbesondere im Hinblick auf einen geringen Kraftstoffverbrauch und/oder eine geringe Schadstoffentwicklung gesteuert und/oder geregelt. Zu diesem Zweck ist das Steuergerät 15 mit einem Mikroprozessor versehen, der in einem Speichermedium, insbesondere in einem Flash-Memory ein Computerprogramm abgespeichert hat, das dazu geeignet ist, die genannte Steuerung und/oder Regelung durchzuführen.

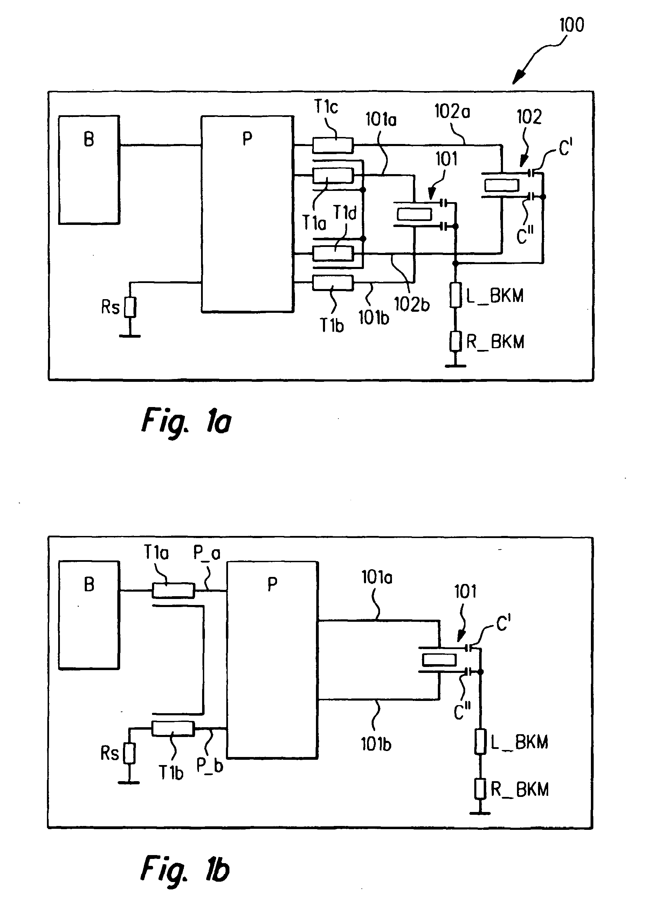

Figur 1a zeigt eine erste Ausführungsform der erfindungsgemäßen Ansteuerschaltung 100, wie sie in dem Steuergerät 15 der Brennkraftmaschine 1 (Fig. 5) realisiert ist, bei der eine Endstufe P zur Ansteuerung der im Folgenden als Piezo-Stellglieder bezeichneten piezoelektrischen Elemente 101, 102, vorgesehen ist.

Bei einer Ansteuerung der Piezo-Stellglieder 101, 102 stellt sich ein Stromfluss eines Steuerstroms aus der elektrische Energie für Ansteuervorgänge speichernden Pufferschaltung B über die Endstufe P und die jeweiligen Piezo-Stellglieder 101, 102, wieder zurück in die Endstufe P und schließlich über einen Messwiderstand Rs nach Masse ein. Hierbei fließt der Steuerstrom bei einer Ansteuerung des Piezo-Stellglieds 101 zunächst über die Wicklung T1a einer in der Ansteuerschaltung 100 vorgesehenen Drossel, dann über das Piezo-Stellglied 101 und schließlich über die Wicklung T1b der Drossel wieder zurück in die Endstufe P. Die beiden Wicklungen T1a, T1b sind ebenso wie die Wicklungen T1c, T1d auf demselben Ferrit-Kern der Drossel angeordnet.

Wie aus Figur 1a ersichtlich, weisen die Piezo-Stellglieder 101, 102 parasitäre Kapazitäten C', C" auf, die insbesondere zwischen Anschlussleitungen 101a, 101b, 102a, 102b und einer Fahrzeugmasse ausgebildet sind. Dieser Sachverhalt ist in Figur 1a mittels eines Ersatzschaltbildes dargestellt, in dem die parasitären Kapazitäten C', C" der Piezo-Stellglieder 101, 102 in Serie zu einer Induktivität L_BKM und einem Ohmwiderstand R_BKM geschaltet sind. Die Induktivität L_BKM repräsentiert hierbei eine Induktivität eines Strompfades, der von den Piezo-Stellgliedern 101, 102 zur Fahrzeugmasse verläuft; der Ohmwiderstand desselben ist durch R_BKM repräsentiert.

Somit ist durch die parasitären Kapazitäten C', C" , die bei den abgebildeten Piezo-Stellgliedern 101, 102 Werte zwischen 500 pF und 1 nF aufweisen können, die Induktivität L_BKM bzw. den Ohmwiderstand R_BKM ein unerwünschter Serienschwingkreis gebildet, der aufgrund des verhältnismäßig geringen Widerstandswerts des Widerstands R_BKM eine hohe Güte aufweist.

Aufgrund einer getakteten Ansteuerung der Piezo-Stellglieder 101, 102 durch die Endstufe P ergeben sich daher bei herkömmlichen Ansteuerschaltungen, d. h. bei Ansteuerschaltungen ohne die in Figur 1a gezeigten Wicklungen T1a, T1b, T1c, T1d der Drossel kapazitive Störströme von dem Piezo-Stellglied 101, 102 über eine Karosserie der Brennkraftmaschine 1 (Fig. 5) bis zur Fahrzeugmasse, die den Serienschwingkreis zu Schwingungen anregen.

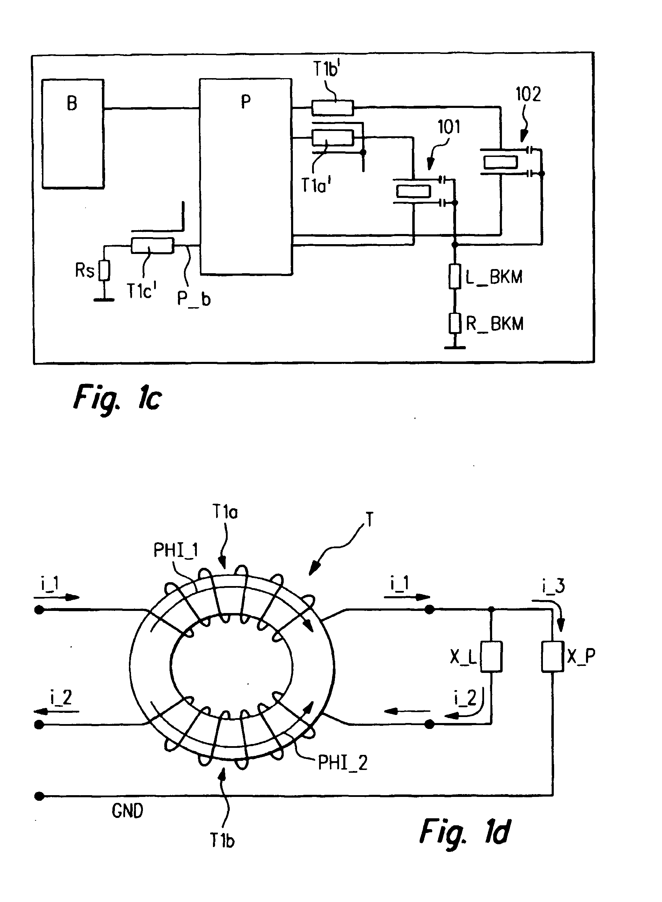

Bei der vorliegenden Erfindung können derartige Störströme nicht auftreten, da sie aufgrund der Wicklungen T1a, T1b, T1c, T1d der Drossel in der nachfolgend unter Bezugnahme auf Figur 1d beschriebenen Weise gedämpft werden.

Figur 1d zeigt hierzu die auch bei der Ansteuerschaltung 100 gemäß Figur 1a verwendete Drossel T, von der in Figur 1d der Übersichtlichkeit halber jedoch nur die beiden Wicklungen T1a, T1b abgebildet sind. Wie aus Figur 1d ersichtlich, wird die Wicklung T1a von einem aus der Ansteuerschaltung P (Figur 1a) herrührenden Steuerstrom i_1 durchflossen und erzeugt dabei den durch den oberen Pfeil in Fig. 1d angedeuteten magnetischen Fluss PHI_1 im Kern der Drossel T. Beim Austreten aus der Wicklung T1a teilt sich der Steuerstrom i_1 auf die beiden in Figur 1d rechts abgebildeten Schaltungszweige auf. Der eine Impedanz X_L aufweisende erste Zweig repräsentiert hierbei symbolisch ein Piezo-Stellglied 101, wie es in Figur 1a abgebildet ist. In dem zweiten Zweig ist eine Impedanz X_P dargestellt, die stellvertretend ist für den bereits mit Bezug auf Figur 1a beschriebenen Serienschwingkreis bestehend aus den parasitären Kapazitäten C', C", der Induktivität L_BKM und dem Ohmwiderstand R_BKM.

Bei dem Austreten aus der Wicklung T1a der Drossel T verzweigt sich der Steuerstrom i_1 dementsprechend in die beiden Ströme i_2 und i_3, wobei i_2 der in die Endstufe P (Figur 1a) zurückfließende Steuerstrom ist, und wobei i_3 ein Störstrom ist, der über die parasitären Kapazitäten C', C" und die weiteren Elemente des Serienschwingkreises (Fig. 1a) schließlich zur Fahrzeugmasse GND (Fig. 1d) abfließt.

Gemäß des Kirchhoffschen Knotensatzes gilt für den in die Endstufe P zurückfließenden Steuerstrom
i_2 = i_1 - i_3,
das bedeutet, dass der in die Endstufe P zurückfließende Steuerstrom i_2 um den Wert des Störstroms i_3 geringer ist, als der in die Wicklung T1a der Drossel T hineinfließende Steuerstrom i_1. Damit ist auch der von dem Steuerstrom i_2 in der Drossel T bzw. in deren Kern bewirkte magnetische Fluss PHI_2 um einen entsprechenden Betrag geringer als der magnetische Fluss PHI_1. Eine Kompensation innerhalb der Drossel T findet daher nur für einen Steuerstrom mit dem Betrag i_2 statt, nicht jedoch für den Differenzstrom i_3 = i_1 - i_2. Dieser Differenzstrom i_3, der den unerwünschten Störstrom durch die parasitären Kapazitäten C', C" darstellt, wird daher von der Drossel T mit ihrer Nenninduktivität stark gedämpft. Hierdurch verschlechtert sich die Güte des unerwünschten Serienschwingkreises, vgl. X_P in Fig. 1d, deutlich, so dass dort erzeugte elektromagnetische Schwingungen nicht mehr zu solch großen elektromagnetischen Störpegeln insbesondere im Motorraum des Kraftfahrzeugs führen können wie bei Ansteuerschaltungen ohne die erfindungsgemäße Drossel T.

Um die vorstehend beschriebene Dämpfungswirkung entfalten zu können und gleichzeitig eine Kompensation der Steuerströme i_1, i_2, bzw. der von ihnen hervorgerufenen magnetischen Flüsse PHI_1, PHI_2 in der Drossel T bzw. in deren Kern erzielen zu können, müssen die Wicklungen T1a, T1b der Drossel T so mit den entsprechenden Punkten der Ansteuerschaltung 100 (Figur 1a) verbunden sein, dass die magnetischen Flüsse PHI_1, PHI_2 einander entgegengerichtet sind. Ferner sind die Windungszahlen der Wicklungen geeignet zu wählen.

Eine entsprechende Dämpfungswirkung von Störströmen betreffend das zweite Piezo-Stellglied 102 in Fig. 1a ist aufgrund der Wicklungen T1c, T1d gegeben, welche nach demselben Prinzip arbeiten und auf demselben Kern der Drossel T angeordnet sein können wie die Wicklungen T1a, T1b.

Es ist auch möglich, für die Piezo-Stellglieder 101, 102 jeweils eine eigene Drossel vorzusehen, welche bei dem Ausführungsbeispiel nach Fig. 1a jeweils nur zwei Wicklungen T1a, T1b bzw. T1c, T1d aufweisen würde.

In Figur 1b ist eine zweite Ausführungsform der erfindungsgemäßen Ansteuerschaltung 100 abgebildet, bei der die erfindungsgemäße Drossel T insgesamt nur noch zwei Wicklungen T1a, T1b aufweist.

Vorteilhaft an der Ausführungsform der Ansteuerschaltung 100 gemäß Figur 1b ist die Tatsache, dass auch bei einer Vielzahl von Stellgliedern (nicht in Figur 1b abgebildet) lediglich die beiden Wicklungen T1a, T1b erforderlich sind, um Störströme durch ein beliebiges Stellglied zu verhindern.

Allerdings kann es bei dieser Konfiguration dazu kommen, dass in der Ansteuerschaltung P beispielsweise kapazitive Kopplungen gegen die Fahrzeugmasse zu einem entsprechenden Störstrom innerhalb der Endstufe P führen, die einen Ausgleichsstrom beispielsweise über das Piezo-Stellglied 101 nach sich ziehen. Hierdurch wird die Wirkung der Drossel T beeinträchtigt.

Bei einer dritten Ausführungsform der erfindungsgemäßen Ansteuerschaltung 100, die in Fig. 1c abgebildet ist, weist die Drossel eine zwischen der Endstufe P und der Fahrzeugmasse bzw. dem Messwiderstand Rs angeordnete Wicklung T1c' auf, sowie eine zwischen der Endstufe P und dem jeweiligen Piezo-Stellglied 101, 102 angeordnete Wicklung T1a', T1b'. Hierdurch können die bei dem Ausführungsbeispiel gemäß Figur 1b angesprochenen Ausgleichsströme über die Piezo-Stellglieder 101, 102 größtenteils vermieden werden, weil sich kapazitive Störströme in der Endstufe P, die schaltungsmäßig noch vor den Wicklungen T1a', T1b' liegen, nicht auf die Piezo-Stellglieder 101, 102 auswirken können, da diese Störströme durch die Drossel gedämpft werden.

Lediglich in Schaltungsteilen der Endstufe P, die zwischen den Piezo-Stellgliedern 101, 102 sowie der Wicklung T1c' der Drossel liegen, ist es möglich, dass dort z. B. zur Fahrzeugmasse fließende Störströme entsprechende Ausgleichsströme durch die Piezo-Stellglieder 101, 102 bewirken können.

Die in Figur 1c abgebildete Ausführungsform der Ansteuerschaltung 100 stellt somit einen Kompromiss hinsichtlich der Anzahl der Wicklungen der Drossel und der Vermeidung von Ausgleichsströmen durch die Piezo-Stellglieder 101, 102 dar, weil je Piezo-Stellglied 101, 102 nur eine Wicklung für die Drossel vorzusehen ist, sowie eine zusätzliche Wicklung T1c', die zwischen der Endstufe P und Masse angeordnet ist.

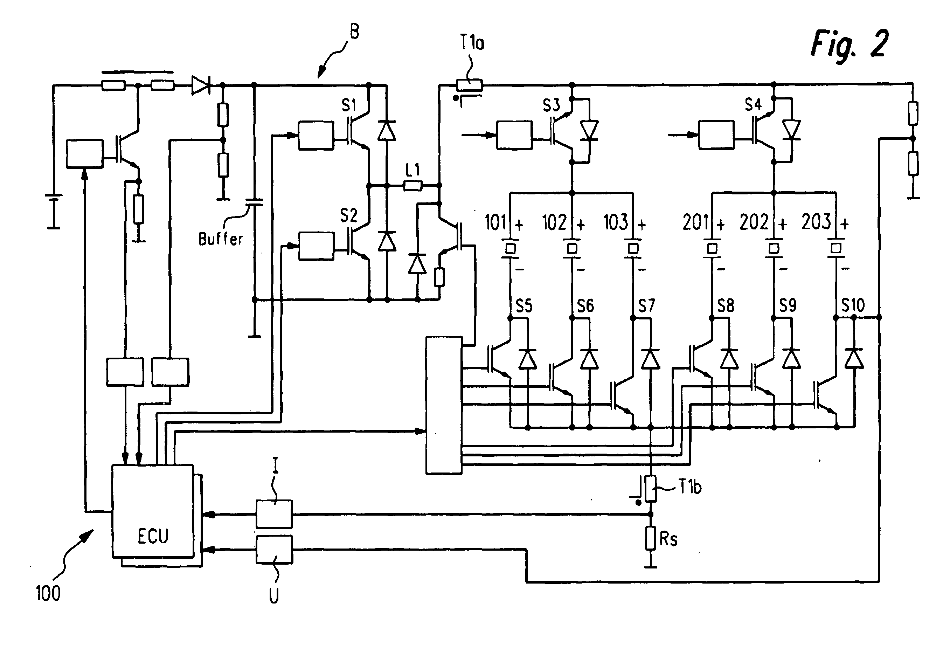

Figur 2 zeigt eine weitere Ausführungsform der vorliegenden Erfindung, bei der eine mit der Ausführungsform aus Figur 1b vergleichbare Anordnung der Drossel realisiert ist.

Die Ansteuerschaltung 100 weist mehrere Piezo-Stellglieder 101, 102, 103, 201, 202, 203 auf, die in zwei Zweige aufgeteilt sind, wobei sich die Zweige durch die Halbleiterschalter S3, S4 auswählen lassen. Ferner sind weitere, ebenfalls als Halbleiter ausgebildete Schalter S5 bis S10 vorgesehen, mit denen innerhalb eines Zweiges ein bestimmtes Piezo-Stellglied 101, 102, 103, 201, 202, 203 ausgewählt werden kann.

Beispielsweise wird zum Aufladen des Piezo-Stellgliedes 101 der Schalter S5 aktiviert, so dass nach einem Einschalten des im Bereich der Pufferschaltung B vorgesehenen Ladeschalters S1 ein Ladestrom über die Transfer-Induktivität L1, die Wicklung T1a der Drossel T (Fig. 1d), die Diode des Zweigschalters S3 und schließlich in das Piezo-Stellglied 101 fließen kann. Beim Verlassen des Piezo-Stellgliedes 101 fließt der Steuerstrom durch den geöffneten Schalter S5 durch eine zweite Wicklung T1b der Drossel T und schließlich durch einen Messwiderstand Rs zur Masse.

Gegebenenfalls zwischen der ersten Wicklung T1a und der zweiten Wicklung T1b der Drossel auftretende Störströme insbesondere kapazitiver Natur, die beispielsweise zu einer Fahrzeugmasse abfließen, werden nach dem oben mit Bezug auf Figur 1d beschriebenen Prinzip gedämpft, nicht jedoch die Steuerströme bzw. der Lade-/Entladestrom selbst.

Zur besseren Kontrolle des Aufladevorgangs erfolgt die Beaufschlagung des Piezo-Stellgliedes 101 mit einem getakteten Ladestrom. Hierbei wird der Ladeschalter S1 bei Erreichen eines bestimmten Stromwertes ausgeschaltet, und die in der Transfer-Induktivität L1 gespeicherte Energie treibt den Ladestrom weiter in das Piezo-Stellglied 101.

Sobald der Ladestrom eine bestimmte untere Grenze unterschreitet, wird der Ladeschalter S1 erneut eingeschaltet und der Ladestrom kann wieder ansteigen. Insgesamt ergibt sich durch diese Vorgehensweise ein im Wesentlichen dreieckförmiger Stromfluss über der Zeit.

Sobald eine durch die Spannungsüberwachungseinheit U festgestellte und in der Ansteuerelektronik ECU ausgewertete Spannung auf dem Piezo-Stellglied 101 erreicht ist, wird der Ladevorgang durch Schließen des Ladeschalters S1 beendet. Eine Erfassung des Ladestroms ist durch die Stromüberwachungseinheit I möglich.

Zum Entladen des Piezo-Stellgliedes 101 wird der entsprechende Zweigschalter S3 und der Entladeschalter S2 aktiviert, so dass ein Entladestrom durch die am Schalter S5 vorgesehene Diode über das Piezo-Stellglied 101, den aktivierten Zweigschalter S3 und schließlich über den Entladeschalter S2 fließen kann. Auch hierbei kompensieren sich die durch die Wicklungen T1a, T1b der Drossel fließenden Ströme, so dass auch beim Entladen Störströme der oben beschriebenen Art gedämpft bzw. verhindert werden, aber der Entladestrom selbst nicht durch die Drossel beeinträchtigt ist.

Bei einem Stromfluss durch die Transfer-Induktivität L1 baut sich ein magnetisches Feld auf, in dem Energie gespeichert wird. Sobald der Entladestrom eine untere Grenze überschreitet, wird der Entladeschalter S2 ausgeschaltet, wodurch die Spannung an der Transfer-Induktivität L1 über eine Spannung am Pufferkondensator Buffer ansteigt, so dass schließlich ein Stromfluss aus der Transfer-Induktivität L1 in den Pufferkondensator Buffer erfolgt. Hiermit wird ein Großteil der bereits zur Aufladung des Piezo-Stellglieds 101 verwendeten elektrischen Energie zurückgewonnen und erneut für zukünftige Ansteuerungen der Piezo-Stellglieder 101, 102, 103, 201, 202, 203 gespeichert. Der Verlauf des Entladestroms über der Zeit ist dabei ebenfalls im Wesentlichen dreieckförmig.

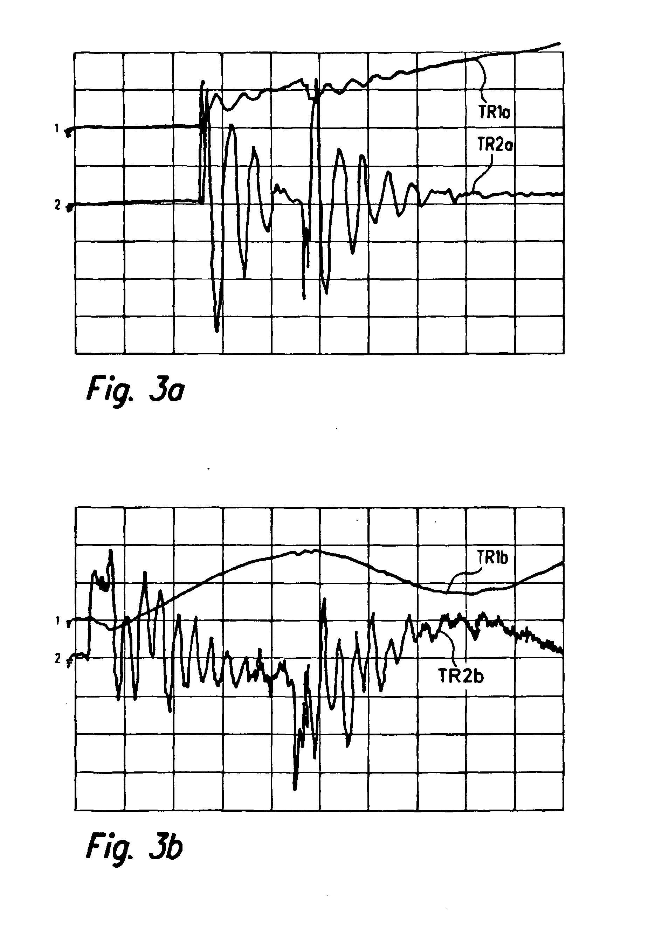

In den Figuren 3a bis 3d sind Messergebnisse aus Messungen im Zeitbereich dargestellt, welche die Wirkungsweise der erfindungsgemäßen Ansteuerschaltung verdeutlichen.

Figur 3a zeigt ein erstes Signal TR1a, welches der Steuerspannung eines das Einspritzventil 9 der schematisch in Figur 5 abgebildeten Brennkraftmaschine 1 betätigenden Piezo-Stellglieds entspricht. Das Signal TR2a gibt eine entsprechende, aufgrund des oben beschriebenen Störstroms resultierende Störspannung zwischen einem Zylinderkopf und der Karosserie des Kraftfahrzeugs wieder. Für diese Messungen ist jedoch eine Ansteuerschaltung ohne die erfindungsgemäße Drossel verwendet worden. Die vertikale Auflösung beträgt hierbei für das Signal TR1a 20 V/division und für das Signal TR2a 1 V/division; beide Signale TR1a, TR2a weisen dieselbe Zeitbasis von 2 µs/division auf.

Es ist deutlich an Figur 3a zu erkennen, dass ohne eine erfindungsgemäße Dämpfung der Störströme mittels einer Drossel die durch das Signal TR2a repräsentierte Störspannung Spitze-Spitze-Spannungswerte von bis zu 6 Volt annehmen kann.

In Figur 3b repräsentiert das Signal TR1b eine Steuerspannung des Einspritzventils 9 (20 V/division, 1 µs/division) und das Signal TR2b die Störspannung zwischen dem Zylinderkopf und der Karosserie (100 mV/division, 1 µs/division) die bei einer Anordnung der erfindungsgemäßen Drossel zwischen der Endstufe P und den Piezo-Stellgliedern 101, 102, 103, 201, 202, 203 (Figur 1a) nur noch eine Spitze-Spitze-Spannung von etwa 400 Millivolt annimmt.

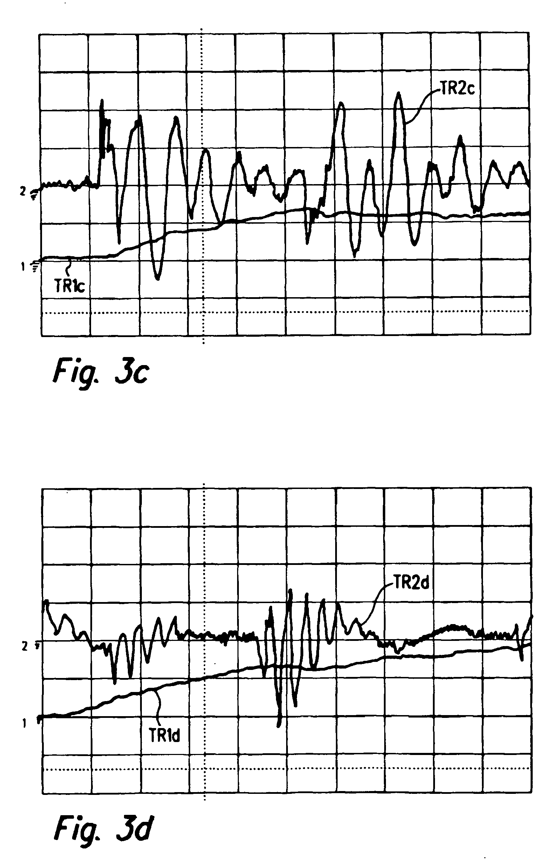

Eine Schaltungskonfiguration der Ansteuerschaltung 100 mit der Drossel gemäß Figur 1b führt auf die in Figur 3c dargestellten Messergebnisse, bei denen das Signal TR1c wiederum eine Steuerspannung des Einspritzventils (20 V/division, 1 µs/division) und das Signal TR2c eine Störspannung zwischen dem Zylinderkopf und der Karosserie (200 mV/division, 1 µs/division) mit einer Spitze-Spitze-Spannung von etwa 800 Millivolt darstellt.

Aus einem Vergleich der Messergebnisse gemäß Figur 3b und 3c ist ersichtlich, dass die nur zwei Wicklungen aufweisende Schaltungskonfiguration gemäß Figur 1b, die den Messergebnissen von Fig. 3c zugrunde liegt, nur eine geringfügig verschlechterte Dämpfung von Störspannungen bietet im Vergleich zu der verhältnismäßig aufwendigen Lösung gemäß Figur 1a, bei der für jedes Piezo-Stellglied 101, 102, 103, 201, 202, 203 jeweils zwei Wicklungen vorgesehen sind.

Eine Anordnung der Wicklungen der Drossel gemäß Figur 1c führt zu den in Figur 3d dargestellten Messergebnissen, wobei das Signal TR1d wiederum die Steuerspannung des Einspritzventils 9 (20 V/division, 1 µs/division) und das Signal TR2d die Störspannung zwischen dem Zylinderkopf und der Karosserie (200 mV/division, 1µs/division) darstellt. Als Spitze-Spitze-Spannung der Störspannung TR2d ist ein Wert von etwa 600 Millivolt aus Figur 3d abzulesen.

Insgesamt ergibt sich bei dem Einsatz der erfindungsgemäßen Ansteuerschaltung 100 mit einer Drossel gegenüber herkömmlichen Ansteuerschaltungen ohne eine erfindungsgemäße Dämpfung von Störströmen bzw. sich daraus ergebenden Störspannungen eine deutlich verbesserte Unterdrückung elektromagnetischer Störungen im Motorraum.

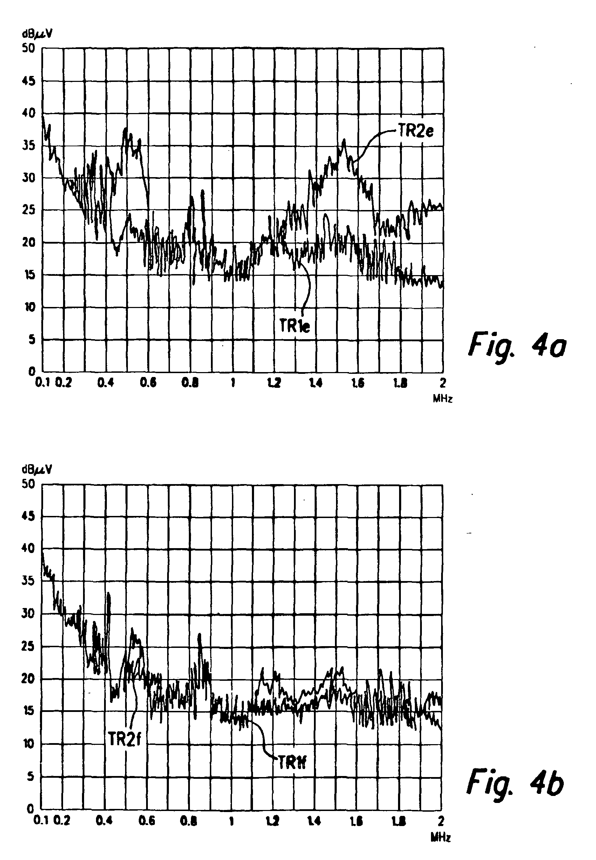

Die Figuren 4a bis 4c repräsentieren Messergebnisse von im Frequenzbereich vorgenommenen Messungen, die jeweils unter Verwendung einer fahrzeugeigenen Antenne vorgenommen worden sind. Dabei ist in allen drei Schaubildern eine gemessene Störamplitude mit bzw. ohne erfindungsgemäße Drossel angegeben, wobei die Frequenzskala jeweils von 0 bis 2 MHz und eine Skala für den Spannungspegel von 0 bis 50 dBpV reicht.

Aus Figur 4a ist ersichtlich, dass sich insbesondere in einem Frequenzbereich um etwa 0,5 MHz und um etwa 1,5 MHz sowie um Frequenzen größer 1,8 MHz deutlich geringere Störspannungen gemäß dem Signal TR1e ergeben im Vergleich zu einer Störspannung TR2e ohne die erfindungsgemäße Anordnung mit der Drossel.

Die Messergebnisse aus Figur 4a korrespondieren hierbei wiederum mit einer erfindungsgemäßen Schaltungsanordnung gemäß Figur 1a.

Die Messergebnisse gemäß Figur 4b geben die Störspannungsverhältnisse bei einer gemäß Figur 1b ausgebildeten Ansteuerschaltung 100 wieder. Auch hier ist eine geringere Störspannung TR2f im Vergleich zum ursprünglichen Signal TR1f zu erkennen.

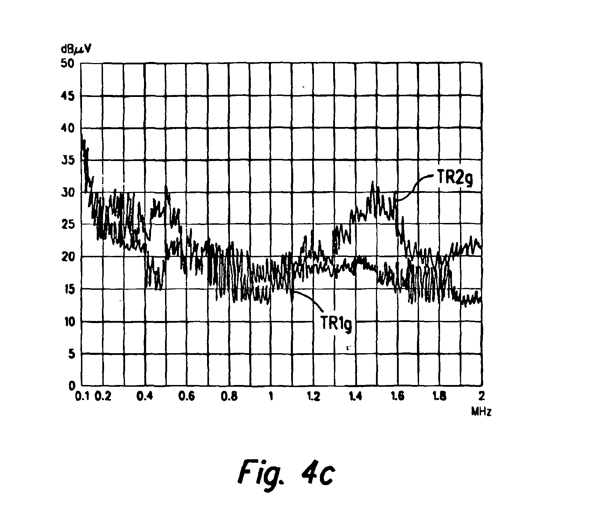

Figur 4c zeigt schließlich die Messergebnisse, wie sie bei einer Schaltungsanordnung gemäß Figur 1c erhalten werden, wobei insbesondere im Frequenzbereich um 1,5 MHz und oberhalb von 1,8 MHz eine deutlich geringere Störspannung TR1g erkennbar ist im Verhältnis zur Störspannung TR2g ohne die erfindungsgemäßen Dämpfungsmaßnahmen mittels der Drossel.

Insgesamt zeigen die Messergebnisse der Messungen im Frequenzbereich gemäß den Figuren 4a bis 4c, dass sich die Störaussendungen aufgrund der Störströme durch den erfindungsgemäßen Einsatz einer Drossel um bis zu 15 dbµv reduzieren lassen.

Bei einer weiteren Ausführungsform der vorliegenden Erfindung ist eine Wicklung (nicht gezeigt) der Drossel zu Messzwecken vorgesehen, die insbesondere zur Erfassung eines sich in der Drossel bzw. in deren Kern einstellenden magnetischen Flusses einsetzbar ist. Auf diese Weise sind auftretende Störströme erkennbar und es kann beispielsweise ein entsprechender Fehlereintrag in einem Fehlerspeicher des Steuergeräts 15 vorgenommen werden.

## Patentansprüche

1. Ansteuerschaltung (100) für mindestens ein Stellglied (101, 102, 103, 201, 202, 203), insbesondere für ein kapazitives Stellglied (101, 102, 103, 201, 202, 203) eines Einspritzsystems einer Brennkraftmaschine (1), bei der das Stellglied (101, 102, 103, 201, 202, 203) mit einem Steuerstrom beaufschlagbar ist, **gekennzeichnet durch** eine Drossel (T), vorzugsweise mit einem Kern, und mit mehreren Wicklungen (T1a, T1b, T1c, T1d, T1a', T1b', T1c'), wobei die Wicklungen (T1a, T1b, T1c, T1d, T1a', T1b', T1c') so ausgebildet und derart mit der Ansteuerschaltung (100) verbunden sind, dass ein in das Stellglied (101, 102, 103, 201, 202, 203) fließender Steuerstrom (i_1) und ein aus dem Stellglied (101, 102, 103, 201, 202, 203) fließender Steuerstrom (i_2) jeweils **durch** verschiedene Wicklungen (T1a, T1b, T1c, T1d, T1d', T1b', Tac') der Drossel (T) fließt, und dass ein von dem in das Stellglied (101, 102, 103, 201, 202, 203) fließenden Steuerstrom (i_1) in der Drossel (T) bzw. deren Kern hervorgerufener magnetischer Fluss (PHI_1) und ein von dem aus dem Stellglied (101, 102, 103, 201, 202, 203) fließenden Strom (i_2) in der Drossel (T) bzw. deren Kern hervorgerufener magnetischer Fluss (PHI_2) sich gegenseitig kompensieren.

2. Ansteuerschaltung (100) nach Anspruch 1, **dadurch gekennzeichnet, dass** die Wicklung (T1a, T1b, T1c, T1d, T1a', T1b', T1c') direkt mit einer Anschlussleitung (101a, 101b, 102a, 102b) des Stellglieds (101, 102, 103, 201, 202, 203) verbunden ist.

3. Ansteuerschaltung (100) nach einem der vorstehenden Ansprüche, **dadurch gekennzeichnet, dass** die Wicklungen (T1a, T1b, T1c, T1d, T1a', T1b', T1c') direkt mit Anschlussleitungen (P_a, P_b) einer zur Ansteuerung des Stellglieds (101, 102, 103, 201, 202, 203) vorgesehenen Endstufe (P) verbunden sind.

4. Ansteuerschaltung (100) nach einem der vorstehenden Ansprüche, **dadurch gekennzeichnet, dass** mindestens eine Wicklung (T1a, T1b, T1c, T1d, T1a', T1b', T1c') direkt mit einer Anschlussleitung (101a, 101b, 102a, 102b) des Stellglieds (101, 102, 103, 201, 202, 203) verbunden ist, und dass mindestens eine Wicklung (T1a, T1b, T1c, T1d, T1a', T1b', T1c') direkt mit einer Anschlussleitung (P_a, P_b) einer zur Ansteuerung des Stellglieds (101, 102, 103, 201, 202, 203) vorgesehenen Endstufe (P) verbunden ist.

5. Ansteuerschaltung (100) nach einem der vorstehenden Ansprüche, **dadurch gekennzeichnet, dass** der Kern der Drossel (T) als Ferrit-Kern ausgebildet ist.

6. Einspritzsystem für eine Brennkraftmaschine (1) mit einer Ansteuerschaltung (100) nach einem der Ansprüche 1 bis 5.

7. Brennkraftmaschine (1) mit einer Ansteuerschaltung (100) nach einem der Ansprüche 1 bis 5.

## Claims

1. Drive circuit (100) for at least one actuator (101, 102, 103, 201, 202, 203), in particular for a capacitive actuator (101, 102, 103, 201, 202, 203) of an injection system of an internal combustion engine (1), in which drive circuit a control current can be applied to the actuator (101, 102, 103, 201, 202, 203), **characterized by** a throttle (T), preferably with a core, and with a plurality of windings (T1a, T1b, T1c, T1d, T1a', T1b', T1c'), with the windings (T1a, T1b, T1c, T1d, T1a', T1b', T1c') being designed and connected to the drive circuit (100) in such a way that a control current (i_1) flowing into the actuator (101, 102, 103, 201,202, 203) and a control current (i_2) flowing out of the actuator (101, 102, 103; 201, 202, 203) each flow through different windings (T1a, T1b, T1c, T1d, T1a', T1b', T1c') of the throttle (T), and that a magnetic flux (PHI_1) produced in the throttle (T) or its core by the control current (i_1) flowing into the actuator (101, 102, 103, 201, 202, 203) and a magnetic flux (PHI_2) which is produced in the throttle (T) or its core by the current (i_2) flowing out of the actuator (101, 102, 103, 201, 202, 203) compensate one another.

2. Drive circuit (100) according to Claim 1, **characterized in that** the winding (T1a, T1b, T1c, T1d, T1a', T1b', T1c') is connected directly to a connection line (101a, 101b, 102a, 102b) of the actuator (101, 102, 103, 201, 202, 203).

3. Drive circuit (100) according to either of the preceding claims, **characterized in that** the windings (T1a, T1b, T1c, T1d, T1a', T1b', T1c') are connected directly to connection lines (P_a, P_b) of an output stage (P) which is intended to drive the actuator (101, 102, 103, 201, 202, 203).

4. Drive circuit (100) according to one of the preceding claims, **characterized in that** at least one winding (T1a, T1b, T1c, T1d, T1a', T1b', T1c') is connected directly to a connection line (101a, 101b, 102a, 102b) of the actuator (101, 102, 103, 201, 202, 203), and **in that** at least one winding (T1a, T1b, T1c, T1d, T1a', T1b', T1c') is connected directly to a connection line (P_a, P_b) of an output stage (P) which is intended to drive the actuator (101, 102, 103, 201, 202, 203).

5. Drive circuit (100) according to one of the preceding claims, **characterized in that** the core of the throttle (T) is in the form of a ferrite core.

6. Injection system for an internal combustion engine (1) having a drive circuit (100) according to one of Claims 1 to 5.

7. Internal combustion engine (1) having a drive circuit (100) according to one of Claims 1 to 5.

## Revendications

1. Circuit de commande (100) pour au moins un actionneur (101, 102, 103, 201, 202, 203), notamment pour un actionneur capacitif (101, 102, 103, 201, 202, 203) d'un système d'injection d'un moteur à combustion interne (1) selon lequel on applique un courant de commande à l'actionneur (101, 102, 103, 201, 202, 203),
**caractérisé en ce qu'**
une bobine (T), de préférence avec un noyau et plusieurs enroulements (T1a, T1b, T1c, T1d, T1a', T1b', T1c'), ces enroulements (T1a, T1b, T1c, T1d, T1a', T1b', T1c') étant réalisés et reliés au circuit de commande (100) pour qu'un courant de commande (i-1) traversant l'actionneur (101, 102, 103, 201, 202, 203) et un courant de commande (i-2) sortant de l'actionneur (101, 102, 103, 201, 202, 203) passent chacun à travers différents enroulements (T1a, T1b, T1c, T1d, T1a', T1b', T1c') de la bobine (T) et
un courant de commande (i-1) traversant l'actionneur (101, 102, 103, 201, 202, 203) compense le flux magnétique (PHI-1) engendré dans la bobine (T) ou dans son noyau et un courant (i-2) sortant de l'actionneur (101, 102, 103, 201, 202, 203), compense dans la bobine (T) ou le flux magnétique (PHI-2) engendré dans la bobine par une compensation réciproque.

2. Circuit de commande (100) selon la revendication 1,
**caractérisé en ce que**
l'enroulement (T1a, T1b, T1c, T1d, T1a', T1b', T1c') est relié directement à une ligne de branchement (101a, 101b, 102a, 102b) de l'actionneur (101, 102, 103, 201, 202, 203).

3. Circuit de commande (100) selon l'une des revendications précédentes,
**caractérisé en ce que**
les enroulements (T1a, T1b, T1c, T1d, T1a', T1b', T1c') sont reliés directement aux lignes de branchement (P-a, P-b) d'un étage de puissance (P) commandant l'actionneur (101, 102, 103, 201, 202, 203).

4. Circuit de commande (100) selon l'une des revendications précédentes,
**caractérisé en ce qu'**
au moins un enroulement (T1a, T1b, T1c, T1d, T1a', T1b', T1c') est relié directement à une ligne de branchement (101a, 101b, 102a, 102b) de l'actionneur (101, 102, 103, 201, 202, 203) et au moins un enroulement (101a, 101b, 102a, 102b) est relié directement à une ligne de branchement (P-a, P-b) d'un étage de puissance (P) pour commander l'actionneur (101, 102, 103, 201, 202, 203).

5. Circuit de commande (100) selon l'une des revendications précédentes,
**caractérisé en ce que**
le noyau de la bobine (T) est un noyau en ferrites.

6. Système d'injection de moteur à combustion interne (1) comportant un circuit de commande (100) selon l'une des revendications 1 à 5.

7. Moteur à combustion interne (1) comportant un circuit de commande (100) selon l'une des revendications 1 à 5.
